# EUROPEAN PATENT SPECIFICATION

(11) **EP 1 375 105 B1**
(45) Date of publication and mention of the grant of the patent: **25.04.2007**
(21) Application number: 03014642.7
(22) Date of filing: 26.06.2003
(51) Int. Cl.: B29C 33/10, B29L 30/00

(54) **Flap ventlid installation assembly, flap ventlid installation structure, and mold for molding a tire**
Klappenventil-Anordnung, Klappenventil-Installationstruktur und Reifenformwerkzeug
Assemblage d'une vanne à clapet, structure d'installation d'une vanne à clapet et moule pour pneumatiques

(30) Priority: 28.06.2002 JP 2002190431; 23.04.2003 JP 2003118157
(43) Date of publication of application: 02.01.2004
(73) Proprietor: NGK INSULATORS, LTD., Nagoya-City, Aichi Pref. 467-8530 (JP)
(72) Inventor: Ishihara, Yasuyuki, Nagoya-city, Aichi-prefecture, 467-8530 (JP)
(74) Representative: TBK-Patent

(56) References cited:
- EP-A- 1 213 131
- DE-A1- 19 833 730
- DE-A1- 19 900 596
- DE-A1- 19 923 952
- DE-C1- 19 543 276
- GB-A- 922 788
- US-A- 3 374 983
- US-A- 4 021 168
- US-A- 4 874 308
- PATENT ABSTRACTS OF JAPAN vol. 011, no. 102 (M-576), 31 March 1987 (1987-03-31) -& JP 61 252113 A (BRIDGESTONE CORP), 10 November 1986 (1986-11-10)

## Description

### Background of the Invention

### (1) Field of the Invention

The present invention relates to a flap ventlid installation assembly, a flap ventlid installation structure, and a mold for molding a tire. More particularly, the present invention relates to a flap ventlid installation assembly according to which a flap ventlid which can prevent occurrence of spew (whisker projections) and burred extensions on a tire surface during tire molding and can retain the initial performance or external appearance of the tire obtained at satisfactory state can be simply installed in a mold for molding a tire, and besides clogging of ventholes of the mold due to penetration of rubber burrs can be easily avoided, an installation structure of the flap ventlid, and a mold for molding a tire.

### (2) Related Art Statement

The molds for molding a tire are often manufactured by means of casting which fits for the forming of complicated shapes conforming to the surface shape designed as complicated shapes having numerous thin projections termed sharp corners or blades for a tire.

Molds for molding a tire manufactured by means of this casting are ordinarily divided into sub-molds, and these sub-molds are combined to form a predetermined form as a whole at the time of forming a tire. There are as a method for dividing the mold a method of cutting into 7 to 11 sub-molds along the circumference (segmented mold type) and a method of cutting into 2 sub-molds in the direction of the central axis (one cast ring type), and these methods can be optionally selected depending on the production conditions, etc.

Molding of a tire using this type of the mold is ordinarily performed by a molding (compression molding) which comprises pressing to a mold a tire raw material (a green tire) comprising a polymerized rubber material before molding (before application of design).

In the course of such a compression molding, closed spaces (blockade spaces) are formed between the green tire and the mold surface on which projections and depressions such as ribs, blades, and the like are formed when a green tire is pressed into a mold. During molding, air within the blockade spaces is not discharged therefrom, and thus resultantly air bubbles are contained in the molded tire finally obtained. This is a problem that air bubble defects called "bear" are produced.

Further, after molding, molds for molding a tire should be ordinarily subjected to inspection and maintenance treatment inclusive of periodic cleanings and the like since the surface of the mold is roughened due to adherence of oils and fats and the like during repeated use. Depending on the mold, this cleaning and the like can become troublesome, requiring the introduction of long cleaning times and expensive equipment. This results in a problem that production costs of the articles produced increase.

To prevent the formation of the aforementioned "bear", methods of removing air from molds are usually implemented to cope with this situation.

As a means for removing air from the closed spaces, there have been conventionally employed two types of means; one of which is called as a venthole type means and the other a non-spew or slit vent type means.

The method employing venthole type means is such a one that air within blockades is discharged therefrom to the outside through air removal apertures called a venthole installed in the mold so as to make them lead to blockades. In the case of this method, the manufacturing costs of the mold are less expensive, and, this method has an advantage since one may employ, for the maintenance and inspection, a simple blast method which comprises blowing media such as glass beads, resin beads, dry ice pellets, and the like to the interior surface of the mold with high-pressure air. However, spew (whisker projections) is formed on the final molded tire (the tire product) since air is discharged with accompanying the outflow of raw tire material (a green tire) into ventholes when the venthole type means is used. There is a disadvantage in that the external appearance and initial running performance of the molded tire are deteriorated.

The method employing a non-spew or slit vent type means is such a method that air within blockades is discharged to the outside through gaps formed between sub-molds or slit-like air removal means provided in the predetermined locations; thus this method is superior in the external appearance with respect to a molded tire. Further, there is an advantage in that there is not seen an adverse effect on the initial running performance. The occurrence of spew can be prevented when a non-spew or slit vent type means is employed, however, it cannot prevent the formation of burred extensions. Further, in the case of this type of a mold, not only the production cost of a mold is expensive, but also there is a disadvantage in that clogging during molding occurs readily. In addition to the above, with regard to maintenance and inspection, the mold should be broken down into every sub-mold, if one employs a simple blast method. Thus, it requires several man-hours for cleaning by blasting. Further, since slit portions clog readily with repeated blasting and the contaminants accumulated in slit portions are difficult to remove, special cleaning methods such as chemical cleaning and plasma cleaning should be used. This would require the cleaning for a long time and the introduction of expensive equipment. This is a disadvantage in that the production costs of the molded products increase.

As mentioned above, there are respective advantages and disadvantages in these two type means for air removal. Therefore, at present one should choose a proper mold, taking into consideration the use of tire to be produced, production costs, and the like. That is, at present, a mold equipped with a non-spew type means is used when a serious consideration must be given to the external appearance and the initial performance of a tire, with the acceptance of a relatively expensive production cost. On the other hand, however, a mold equipped with a venthole type means is used when a serious consideration must be given to the production cost of a mold and the running cost in tire molding, with the acceptance of a relatively poor external appearance and relatively poor initial running performance of a tire. Thus, a satisfactory measure in all aspects of the external appearance, the initial performance and the production costs of tire is sought after.

In light of these circumstances, various types of measures are being proposed. For example, there is proposed in document JP-AP-9-141660 a mold equipped with air removal lids provided in ventholes. This air removal lid is provided with a movable lid insert comprising an axis and a lid head disposed thereon. This lid head is provided with a cavity and a surface having a circular-truncated-cone-shape on the opposite side of the cavity, and being mostly flat on the side near to the cavity. Further, this air removal lid is provided with a casing and is press fitted into the venthole together with this casing.

An air removal lid thus configured has the functions mentioned below. Namely, the lid insert is always pressed to upper side by means of a spring loaded with force. Moreover, the lid insert is, during compression molding using a green tire, pressed down in opposition to the loaded force of a spring by means of pressing a level surface of the lid head into a green tire. During this downward pressing, air can be removed through gaps, that is, air passages, formed between the casing and lid insert. Further, infiltration into air passages of the green tire can be prevented by interrupting air passages with such contact of the casing and the circular-truncated-cone-shaped surface when compression molding is completed. Furthermore, the lid insert is pushed upwardly again by means of a loaded spring in the cavity during removal of the vulcanized tire from the mold after vulcanization is completed.

Nonetheless, a mold provided with said air removal lid suffers, as mentioned later, from clogging in a relatively high frequency due to constraints of that structure. The "leakage distance" which is an index for judging the easiness in clogging, defined as "Area in the Opening and Closing Surface of an Air Removal Lid", and possible defined also as the contact area between the casing and the circular-truncated-cone-shaped surface in the case of the device disclosed in document JP-A-9-141660, or, in other words, the "distance from the peripheral portion of the lid opening and closing surface to the holes for air removal" and the distance from the peripheral portion of the casing to the entrance of air passages in the case of the device disclosed in document JP-A-9-141660 cannot be set to be long. In this event, rubber burrs are readily reachable up to the air removal holes i.e., air passages during tire molding. As a consequence, there is such a problem that they infiltrate into air removal holes and cause clogging. Namely, said constraints are present as a result of the structure since the air removal lid must be embedded inside a tubular casing and stored. To avoid interference in designing, one can not employ a casing having an external diameter in terms of radius of approximately 3 mm or more. In this event, the internal diameter of the casing should be shortened to have a long leakage distance. The radius, however, must be approximately 1.6 mm even at a minimum since the air removal lid is housed in the venthole. Therefore, since there exists the boundary in having a long leakage distance, clogging occurs readily from rubber burr infiltration into air removal holes (air passages). Thus, this brings a problem that the increase in the maintenance expenses (running cost) cannot be eliminated. Moreover, in the case that rubber burrs which have been temporarily infiltrated into the internal area of the air removal holes (air passages) are cut off at the time of demolding the tire from the mold, this would result in a further rise in the probability of the occurrence of clogging. This is because a portion corresponding to the leakage distance is housed in the internal portion of the air removal holes (air passages). Further, there is a problem in that production costs increase due to the numerous parts and complicated structures.

With respect to these problems, the inventor has proposed a flap ventlid which is provided on the tire mold surface side of the venthole and which has such a lid mechanism that in molding a tire by pressing a green tire to the respective surface of a tire mold, air is discharged from blockades with keeping an open state by spring up until said green tire contacts an upper portion of the mold and air is discharged from the blockades while reducing degree of its spring up during a period from a time when said green tire contacts said upper portion to a time when it reaches the surface of sub-molds, and simultaneously the green tire is prevented from flowing out by forming a closed state where the ventlids intimately contact with said green tire by dissolving its springing up when said green tire reaches the surfaces of said sub-molds (document EP-A-1213131). By installing a flap ventlid constructed as above in a tire molding mold, when molding a tire, the occurrence of spew (whisker projections) and burred extensions on a tire surface can be prevented and the tire obtained can have good initial performance and external appearance, and at the same time, the production costs of the tire molding mold per se can be reduced and clogging derived from rubber burr infiltration in ventholes can be effectively prevented and the running costs can be reduced by simplifying maintenance and inspection work.

A flap ventlid installation assembly comprising the features summarized in the preamble of claim 1 is known from document US-A-4 021 168, in particular the embodiments according to Figures 5 to 14 thereof.

### SUMMARY OF THE INVENTION

It is an object of the present invention to provide a flap ventlid installation assembly which is designed such that foreign particles clogging an air removing hole can readily be removed. Furthermore, it is an object of the present invention to provide a flap ventlid installation structure comprising the improved flap ventlid installation assembly.

According to the invention, these objects are achieved by the flap ventlid installation assembly defined in claim 1 and by the flap ventlid installation structure defined in claim 2.

### Brief Explanation of Drawings

Fig. 1 is an oblique view which schematically shows one embodiment of the flap ventlid installation assembly installed in a mold for molding a tire according to the present invention.
Fig. 2 is an oblique view which shows one embodiment of the flap ventlid installation assembly according to the present invention.
Fig.3 (a) to Fig. 3 (c) are oblique views which show steps in sequence in one embodiment of installing the flap ventlid installation assembly in a mold for molding a tire according to the present invention.
Fig. 4 (a) and Fig. 4 (b) are explanatory drawings which show one embodiment of a mold for molding a tire used for flap ventlid installation structure according to the present invention.
Fig. 5 is an explanatory drawing which shows one embodiment of a mold for molding a tire used for flap ventlid installing structure according to the present invention.
Fig. 6 is an oblique view which schematically shows one embodiment of a mold for molding a tire and a flap ventlid installation assembly used for flap ventlid installation structure according to the present invention.
Fig. 7(a) and Fig. 7 (b) are explanatory drawings which schematically show a state in one embodiment of installing a flap ventlid installation assembly used for flap ventlid installation structure in a mold for molding a tire according to the present invention.
Fig. 8 is an oblique view which schematically shows the behavior in one embodiment of drawing out the flap ventlid installation assembly used for flap ventlid installation structure from a mold for molding a tire, thereby raking out foreign matters accumulated in the venthole.
Fig. 9 is an oblique view which schematically shows one embodiment of the flap ventlid installation assembly used for flap ventlid installation structure in which a projection is formed.
Fig. 10 is an explanatory drawing which shows the mold for molding a tire used in an Example.
Fig. 11(a) to Fig. 11(e) are explanatory drawings which show the steps in sequence of forming the flap ventlid installation assembly used in an Example.

### Detailed Description of the Preferred embodiments

Embodiments of a flap ventlid installation assembly, a flap ventlid installation structure, and a mold for molding a tire according to the present invention will be specifically explained referring to the drawings.

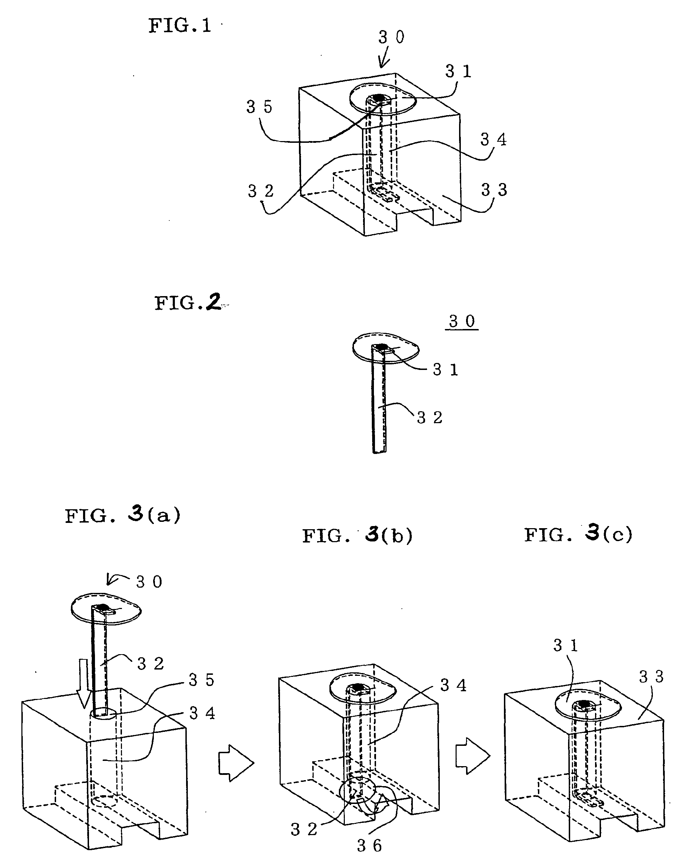

First, a flap ventlid installation assembly which is one of the embodiments of the present invention will be explained. Fig. 1 shows a flap ventlid installation assembly 30 which is used for installing a flap ventlid 31 which functions as an opening and closing lid passing or interrupting the flow of air at an opening 35 of a venthole 34 (air removing hole) on the design surface of a tire mold 33 (mold for molding a tire) in which the venthole 34 is formed. As shown in Fig. 2. the flap ventlid installation assembly 30 of this embodiment comprises a flap ventlid 31 and an anchor member 32, the top portion of which is connected to the flap ventlid 31 and which has a length in longer direction longer than the depth of the venthole 34 (see Fig. 1), and the flap ventlid 31 can be installed in the state of at least a part of the flap ventlid 31 contacting with the design surface of the tire mold 33 as shown in Fig. 3 (c) by inserting the anchor member 32 of the flap ventlid installation assembly 30 from the opening 35 of the venthole 34 at the design surface as shown in Fig. 3 (a) and bending the end portion of the anchor member 32 projecting from an opening 36 of the venthole 34 on the side opposite to the design surface at the opening 36 of the venthole 34 as shown in Fig. 3(b).

By constructing as above, in the tire mold 33 can be simply installed the flap ventlid 31 which can prevent occurrence of spew (whisker projections) and burred extensions on a tire surface during tire molding and can retain the initial performance or external appearance of the tire obtained at satisfactory state.

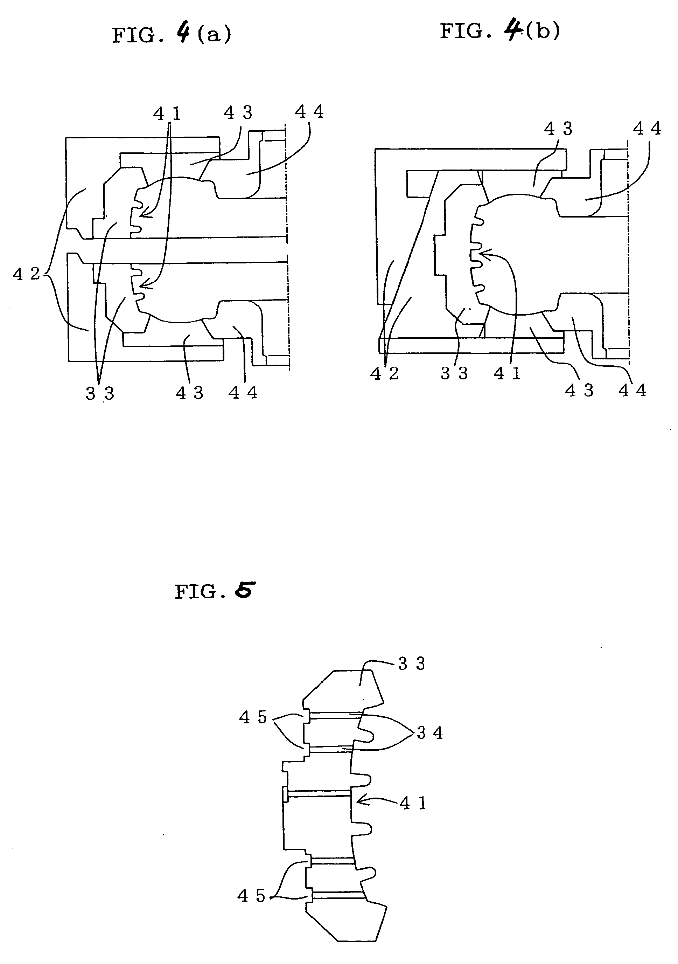

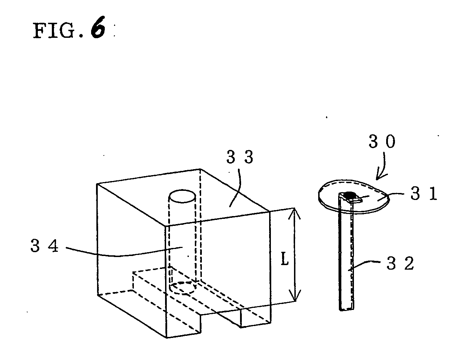

In general, as for the tire mold 33, it is used in such a manner as the design surface 41 of the tire mold 33 being held by a back mold 42 as shown in Fig. 4 (a) and Fig. 4 (b). Fig. 4 (a) shows a tire mold of 2P mold type (one cast ring type) and Fig. 4 (b) shows a tire mold of sectional mold type (segmented mold type). In this tire mold 33, only by piercing a venthole (not shown) from the design surface 41 of the tire mold 33 to the back surface, sufficient ventilation cannot be assured because the opening of the venthole (not shown) is closed by the back mold 42 which surface-contacts with the back surface side. Therefore, as shown in Fig. 5, ordinarily, an air escaping groove portion 45 connected directly to the venthole 34 is formed on the back surface side (outer peripheral surface) of the design surface 41 of the tire mold 33. In Fig. 4 (a) and Fig. 4 (b), the reference numeral 43 indicates a side wall and 44 indicates a bead ring.

According to this embodiment, the anchor member 32 (see Fig. 1) is fixed utilizing the air escaping groove 45 formed on the back surface side of the design surface 41 of the tire mold 33.

The anchor member 32 can be formed by using a plate-like anchor material longer than the length L of the venthole 34 of the tire mold 33 and by subjecting this anchor material to bending so that the flap ventlid 31 can be welded to the anchor material. This anchor material is preferably formed so that it is longer than the length L of the venthole 34 by the length of the portion to which the flap ventlid 31 is welded and the length of the portion bent at the opening 36 of the venthole 34 on the side opposite to the design surface. The flap ventlid installation assembly 30 can be formed by welding the flap ventlid 31 to the portion of the anchor member 32 which is subjected to bending. It is preferred to bend the flap ventlid 31 in such a shape as effectively functioning as an opening and closing lid when installed in the tire mold 33 (see Fig. 1).

The flap ventlid 31 is welded to the upper part of the anchor member 32 using a welding machine etc. The welding of the flap vent lid 31 to the anchor member 2 may be carried out after installing the anchor member 32 in the tire mold 33 (see Fig. 1), but is preferably carried out before installation in the tire mold 33 because positioning of the flap ventlid 31 and welding operation can be simply performed. The anchor material can be formed by cutting out from a steel material having a suitable strength and spring characteristics. Although not particularly limited, there may be used, for example, spring steels, precipitation hardening stainless steels, precipitation hardening nickel alloys, etc. Furthermore, among these materials, precipitation hardening stainless steels and precipitation hardening nickel alloys which can maintain high strength characteristics for a long time in a temperature range of about 150-200°C are suitable because the tire mold 33 (see Fig. 1) is kept and used for a long time in the above temperature range. The flap ventlid 31 is preferably made of a flexible material which is chemically inert with a tire raw material before molding (green tire) and does not fusion bond thereto and which can be repeatedly used at a temperature of 100-200°C, and, for example, iron alloys (various steel materials) or nickel alloys can be exemplified. Furthermore, preferred are those which can be made thinner in their thickness to such an extent as the traces of the flap ventlid 1 causing no problems on the appearance of the tire.

The flap ventlid installation assembly 30 formed in the above manner is such that the body of tire mold 33 (mold for design surface) must be removed from the back mold 42 (see Fig. 4 (a)) at the time of changing of the flap ventlid installing assembly 30. The flap ventlid installation assembly 30 has the advantages that the possibility of the flap ventlid installation assembly 30 falling off from the tire mold 33 during removal of the molded tire can be considerably reduced, and stability of tire molding can be improved.

Furthermore, in this embodiment, since the shape of the anchor member 32 is simple, production cost can be reduced. Moreover, according to this embodiment, the initial installing operation into the tire mold 33 is very easy, and the changing of the flap ventlid installation assembly 30 can be performed very easily except for the operation of removing the mold in which the design surface 41 (see Fig. 4 (a)) is formed from the back mold 42 (see Fig. 4 (a)).

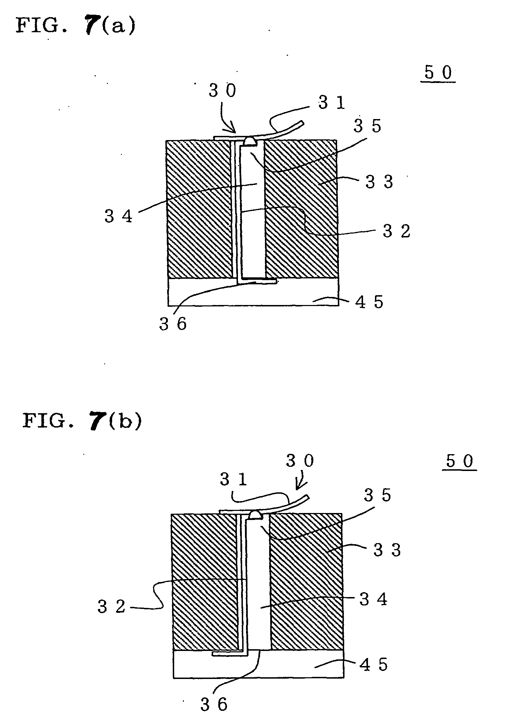

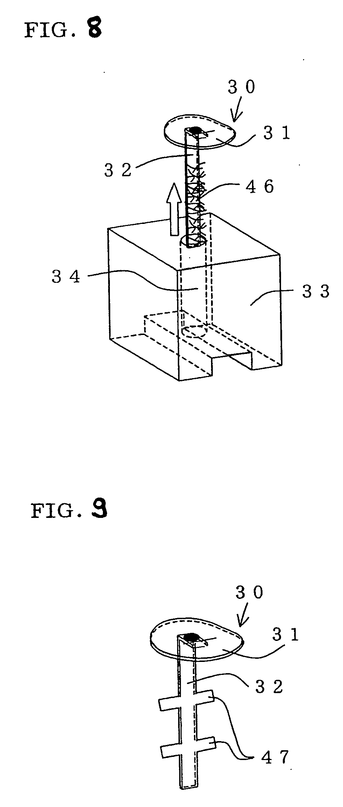

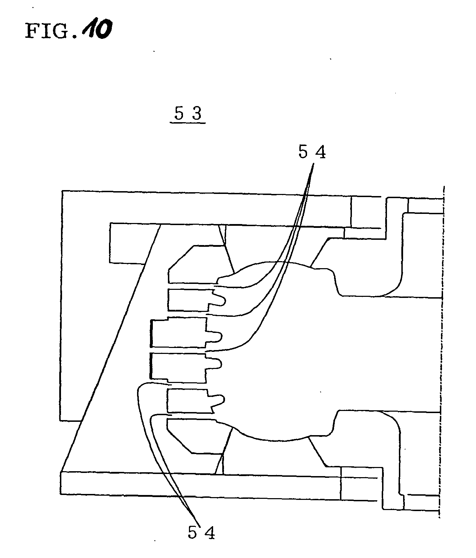

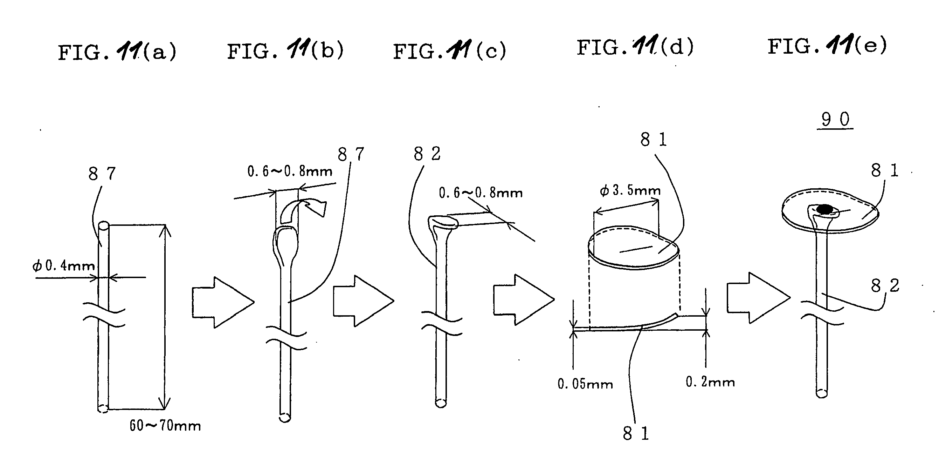

Next, a flap ventlid installation structure which is one of the embodiments of the present invention will be explained. As shown in Fig. 7 (a), in the flap ventlid installation structure 50 of this embodiment the flap ventlid installation assembly 30 constructed in the same manner as shown in Fig. 2 is installed in such a state that at least a part of the flap ventlid 31 contacts with the design surface of the tire mold 33 by inserting the anchor member 32 from the opening 35 of the venthole 34 at the design surface and bending the end portion of the anchor member 32 projecting from the opening 36 of the venthole 34 on the side opposite to the design surface at the opening 36 of the venthole 34.

In this embodiment, the end portion of the anchor member 32 projecting from the opening 36 of the venthole 34 on the side opposite to the design surface is bent at the opening 36 utilizing the air escaping groove 45 formed on the back surface side of the design surface of the tire mold 33 (see Fig. 5). In Fig. 7 (a), the end portion of the anchor member 32 is bent in the same direction as the opening direction of the flap ventlid 31 which functions as an opening and closing lid, but may be bent in the direction opposite to the opening direction of the flap ventlid 31 as shown in Fig. 7 (b). Since the flap ventlid installation structure 50 shown in Fig. 7 (b) is constructed in the same manner as the flap ventlid installation structure 50 shown in Fig. 7 (a), the same reference numerals are given to the same elements with omitting the explanations thereof.

As shown in Fig. 7 (a) and Fig. 7 (b), according to the flap ventlid installation structure 50 of this embodiment, in a tire mold 33 can be simply installed the flap ventlid 31 which can prevent occurrence of spew (whisker projections) and burred extensions on a tire surface during tire molding and can retain the initial performance or external appearance of the tire obtained in satisfactory state. Furthermore, the flap ventlid 31 can be simply installed in also the tire mold 33 made of an aluminum alloy or the like to which the flap ventlid 31 cannot be directly welded. Moreover, since scaffold for welding to the tire mold 33 and caulking operation of the flap ventlid 31 per se are not required, breakage and the like of the design surface of the tire mold 33 can be avoided. Further, in this embodiment, the flap ventlid installation assembly 30 is removably provided. When the flap ventlid 31 must be changed owing to breakage or the like, it can be removed without leaving shape defects such as welding traces in the tire mold 33, and a new flap ventlid installation assembly 30 can be simply installed only by inserting it in the tire mold 33.

Moreover, in this embodiment, it is provided that as shown in Fig. 8, the flap ventlid installation assembly 30 is provided in such a state that when the flap ventlid installation assembly 30 installed in the tire mold 33 is drawn out from the venthole 34, the anchor member 32 can rake out the foreign matters 46 accumulated in the venthole 34. Specifically, suitable is a flap ventlid installation assembly 30 in which the flap ventlid 31 is welded to the anchor member 32 having projections 47 for raking out the foreign matters 46 (see Fig. 9) and which is installed in the tire mold 33 (see Fig. 8).

Moreover, in this embodiment, the anchor member 32 has such construction that it is made of a material to which the foreign matters 46 accumulated in the venthole 34 can readily adhere, as shown in Fig. 8, or such material is coated on the surface, and, as the material, there is used copper and copper alloys, for example a berylluim-copper alloy. By constructing in this way, the foreign matters 46 accumulated in the venthole 34 can readily be raked out only by drawing out the flap ventlid installation assembly 30 from the tire mold 33 without forming the anchor member 32 in a special shape. Thus, the foreign matters 46 accumulated in the venthole 34 can be raked out even without forming the projections 47 (see Fig. 9) or the like at the anchor member 32.

Hitherto, copper alloys have been considered unsuitable as materials of members constituting the tire mold 33 since they react with sulfur in the vulcanized rubber constituting the tire and hence are high in adhesion to the vulcanized rubber of tire, but in this embodiment, the foreign matters 46 accumulated in the venthole 34 can be easily removed by adhering the foreign matters to the anchor member 32 with utilizing the characteristics of copper alloys mentioned above.

In the case of the anchor member 32 being formed of the above-mentioned metal or alloys comprising the metal, the material of the flap ventlid 31 must be formed of a material weldable with the anchor member 32. The flap ventlid 31 can be made of spring steel, precipitation hardening type stainless steel, precipitation hardening type nickel alloy, or the like, but, when the material of the anchor member 32 is a copper or a copper alloy, it is preferred to form the flap ventlid 31 using a nickel alloy because of low adhesion of various steel materials to a copper alloy by welding.

Next, the method for installing a flap ventlid will be explained. As shown in Fig. 1, the method is for installing, at the opening 35 of the venthole 34 on the design surface of the tire mold 33 in which the venthole 34 is formed, the flap ventlid 31 which functions as an opening and closing lid passing or interrupting the flow of air at the opening 35. The flap ventlid 31 is installed in the tire mold 33 as shown in Fig. 3 (c) by using the flap ventlid installation assembly 30 as shown in Fig. 2, and inserting the anchor member 32 in the venthole 34 so that at least a part of the flap ventlid 31 contacts with the design surface of the tire mold 33 as shown in Fig. 3 (a), and bending the end portion of the anchor member 32 projecting from the opening 36 of the venthole 34 on the side opposite to the design surface at the opening 36 of the venthole 34 as shown in Fig. 3 (b).

By constructing as above, in the tire mold 33 can be simply installed the flap ventlid 31 which can prevent occurrence of spew (whisker projections) and burred extensions on the tire surface during tire molding and can retain the initial performance or external appearance of the tire obtained at satisfactory state.

Furthermore, the flap ventlid installation assembly 30 used in this embodiment is not limited to the flap ventlid installation assembly 30 shown in Fig. 2, but may be of any shapes so long as the flap ventlid installation assembly 30 comprises the flap ventlid 31 and the anchor member 32, the top portion of which is connected to the flap ventlid 31 and which has a length in the longer direction longer than the depth of the venthole 34, and the flap ventlid 31 can be installed in the state of at least a part of the flap ventlid 31 contacting with the design surface of the tire mold 33 by bending the end portion of the anchor member 32 projecting from the opening 36 of the venthole 34 on the side opposite to the design surface at the opening 36 of the venthole 34.

The flap ventlid installation assembly, the flap ventlid installation structure, and the tire mold explained above are not limited to those mentioned above and may be of any shapes so long as the flap ventlid can be installed in the tire mold with the above-mentioned construction. For example, a wire can be used as the anchor member in place of the plates. Furthermore, the method for bonding the anchor member and the flap ventlid is not limited to welding.

### Example

The present invention will be explained in more specifically by the following example, which should not be construed as limiting the invention in any manner. In the example, a tire mold 53 of sectional mold type (segmented mold type) made of AC4C aluminum alloy (7% Si, 0.4% Mg, 1% Cu, 0.5% Fe with the remainder being Al) as shown in Fig. 10 was used. This tire mold 53 had a shape of 320 mm in overall height, φ 600 mm in inner diameter, φ 700 mm in outer diameter and 50 mm in wall thickness, and had about 1000 ventholes 54 of φ 1. 2 mm in opening diameter of opening 55 which were formed in the design surface part. This tire mold 53 was made by a plaster casting method.

An anchor material 87 having the shape as shown in Fig. 11(a) was formed using a solution heat treated material (BeA25), heated at 800°C for 1 hour and then quenched.

Then, one end portion of the anchor material 87 was crushed in the form of a plane by pincers and the like as shown in Fig. 11(b) and then subjected to age-hardening heat treatment (heating at 280°C for 2 hours and then air cooling) as shown in Fig. 11(c).

Then, a flap ventlid 81 having the shape as shown in Fig. 11 (d) was formed. The flap ventlid 81 was formed using Inconel 718, which was subjected to heating at 955°C for 1 hour, then air cooling, bending, heating at 720°C for 8 hours, cooling in a furnace, further heating at 620°C for 8 hours, and then air cooling.

Then, the anchor member 82 and the flap ventlid 81 were bonded by percussion welding to form a flap ventlid installation assembly 90 as shown in Fig. 11(e). The conditions of the welding were as follows: An electrode made of pure copper and having a welding electrode diameter of φ 0.8 mm was used and the welding power was 20 W sec.

When the thus formed flap ventlid installation assembly 90 was installed in a tire mold in which the ventholes were clogged, the top portion of the anchor member 82 pushed out the foreign matters which caused the clogging to solve the clogging of the ventholes. The end portion projecting from the opening of the venthole on the side opposite to the design surface was bent at the opening to form the tire mold of this example.

As a result of continuously molding 20000 tires using the tire mold of this example, good results were obtained without causing bare defects of tires and without forming spew at the positions corresponding to the ventholes. Furthermore, there occurred no defects such as falling off of the flap ventlid installing assembly from the tire mold.

As explained above, according to the present invention, the flap ventlid which can prevent occurrence of spew (whisker projections) and burred extensions on a tire surface during tire molding and can retain the initial performance or external appearance of the tire obtained at satisfactory state can be simply installed in a mold for molding a tire, and besides the clogging caused by penetration of rubber burrs etc. into the air removing holes (ventholes) of the mold for molding tires can be easily solved.

## Claims

1. A flap ventlid installation assembly (30) for installing a flap ventlid (31) at an opening (35) of an air removing hole (34) that is formed in a mold (33) for molding a tire, the opening (35) being located on a design surface (41) of the mold (33) and the air removing hole (34) extending toward an opposed surface of the mold (33) opposing the design surface (41),
said flap ventlid installation assembly (30) comprising
a flap ventlid (31) functioning as an opening and closing lid for passing and interrupting air flow at the opening (35), and
an anchor member (32) for holding said flap ventlid installation assembly (30) on the mold (33), wherein said anchor member (32) has a top portion connected to said flap ventlid (31) and extends from said top portion to an end portion of said anchor member (32),
wherein said end portion is formed to be bendable, and
wherein said flap ventlid (31) is adapted to be installed in the mold (33) such that at least a part of said flap ventlid (31) contacts the design surface (41) of the mold (33),
said flap ventlid installation assembly (30) being
**characterized**
**in that** said anchor member (32) comprises or is coated with a copper or copper alloy material.

2. A flap ventlid installation structure comprising
the flap ventlid installation assembly (30) according to claim 1, and
a portion of a mold (33) for molding a tire, said portion of said mold (33) having an air removing hole (34) that is formed in said mold (33) and has a first opening (35) located on a design surface (41) of said mold (33) and extends toward a second opening (36) located on an opposed surface of said mold (33) opposing said design surface (41),
wherein said anchor member (32) is inserted into said air removing hole (34),
wherein said end portion of said anchor member (32) projects from said second opening (36) and is bent at said second opening (36), and
wherein at least a part of said flap ventlid (31) contacts said design surface (41) of said mold (33).

3. A tire mold provided with the flap ventlid installation structure according to claim 2.

## Patentansprüche

1. Klappenventildeckelanbringungsbaugruppe (30) zum Anbringen eines Klappenventildeckels (31) an einer Öffnung (35) eines Luftentfernungslochs (34), das in einer Form (33) zum Formen eines Reifens ausgebildet ist,
wobei die Öffnung (35) an einer Gestaltungsfläche (41) der Form (33) angeordnet ist und sich das Luftentfernungsloch (34) in Richtung einer gegenüberliegenden Fläche der Form (33) erstreckt, die gegenüberliegend zu der Gestaltungsfläche (41) ist,
wobei die Klappenventildeckelanbringungsbaugruppe (30) Folgendes aufweist:
einen Klappenventildeckel (31), der als ein Öffnungs- und Schließdeckel zum Durchleiten und Unterbrechen einer Luftströmung an der Öffnung (35) wirkt, und
ein Ankerbauteil (32) zum Halten der Klappenventildeckelanbringungsbaugruppe (30) an der Form (33), wobei das Ankerbauteil (32) einen oberen Abschnitt hat, der mit dem Klappenventildeckel (31) verbunden ist, und sich von dem oberen Abschnitt zu einem Endabschnitt des Ankerbauteils (32) erstreckt,
wobei der Endabschnitt biegbar ausgebildet ist, und
wobei der Klappenventildeckel (31) angepasst ist, um in der Form (33) derart angebracht zu sein, dass zumindest ein Teil des Klappenventildeckels (31) die Gestaltungsfläche (41) der Form (33) berührt,
wobei die Klappenventildeckelanbringungsbaugruppe (30) **dadurch gekennzeichnet ist, dass**
das Ankerbauteil (32) ein Kupfer- oder ein Kupferlegierungsmaterial ist oder damit beschichtet ist.

2. Klappenventildeckelanbringungsstruktur mit
der Klappenventildeckelanbringungsbaugruppe (30) gemäß Anspruch 1, und
einem Abschnitt einer Form (33) zum Formen eines Reifens, wobei der Abschnitt der Form (33) ein Luftentfernungsloch (34) hat, das in der Form (33) ausgebildet ist und eine erste Öffnung (35) hat, die an einer Gestaltungsfläche (41) der Form (33) angeordnet ist, und sich in Richtung einer zweiten Öffnung (36) erstreckt, die an einer gegenüberliegenden Fläche der Form (33) angeordnet ist, die zu der Gestaltungsfläche (41) gegenüberliegend ist,
wobei das Ankerbauteil (32) in das
Luftentfernungsloch (34) eingesetzt ist,
wobei der Endabschnitt des Ankerbauteils (32) von der zweiten Öffnung (36) vorsteht und an der zweiten Öffnung (36) gebogen ist, und
wobei zumindest ein Teil des Klappenventildeckels (31) die Gestaltungsfläche (41) der Form (33) berührt.

3. Reifenform, die mit der Klappenventildeckelanbringungsstruktur gemäß Anspruch 2 bereitgestellt wird.

## Revendications

1. Ensemble d'installation d'une vanne à clapet (30) pour l'installation d'une vanne à clapet (31) au niveau d'une ouverture (35) d'un trou de purge d'air (34) qui est formé dans un moule (33) pour mouler un pneu, l'ouverture (35) étant située sur une surface de conception (41) du moule (33) et le trou de purge d'air (34) s'étendant vers une surface opposée du moule (33) en regard de la surface de conception (41),
ledit ensemble d'installation d'une vanne à clapet (30) comprenant
une vanne à clapet (31) servant de bouchon d'ouverture et fermeture pour laisser passer et bloquer le flux d'air au niveau de l'ouverture (35), et
un élément d'ancrage (32) pour maintenir ledit ensemble d'installation d'une vanne à clapet (30) sur le moule (33), dans lequel ledit élément d'ancrage (32) possède une partie supérieure connectée à ladite vanne à clapet (31) et s'étend depuis ladite partie supérieure jusqu'à une partie d'extrémité dudit élément d'ancrage (32),
dans lequel ladite partie d'extrémité est formée pour être pliable, et
dans lequel ladite vanne à clapet (31) est adaptée pour être installée dans le moule (33) de telle sorte qu'au moins une partie de ladite vanne à clapet (31) vient en contact avec la surface de conception (41) du moule (33),
ledit ensemble d'installation d'une vanne à clapet (30) étant **caractérisé**
**en ce que** ledit élément d'ancrage (32) comprend ou est enduit d'un matériau de cuivre ou d'alliage de cuivre.

2. Structure d'installation d'une vanne à clapet comprenant
l'ensemble d'installation d'une vanne à clapet (30) selon la revendication 1, et
une partie d'un moule (33) pour mouler un pneu, ladite partie dudit moule (33) comportant un trou de purge d'air (34) qui est formé dans ledit moule (33) et possède une première ouverture (35) située sur une surface de conception (41) dudit moule (33) et s'étend vers une deuxième ouverture (36) située sur une surface opposée dudit moule (33) en regard de ladite surface de conception (41),
dans lequel ledit élément d'ancrage (32) est inséré dans ledit trou de purge d'air (34),
dans lequel ladite partie d'extrémité dudit élément d'ancrage (32) dépasse de ladite deuxième ouverture (36) et est pliée au niveau de ladite deuxième ouverture (36), et
dans lequel au moins une partie de ladite vanne à clapet (31) vient en contact avec ladite surface de conception (41) dudit moule (33).

3. Moule de pneu muni de la structure d'installation d'une vanne à clapet selon la revendication 2.
